# EUROPÄISCHE PATENTANMELDUNG

(11) **EP 2 537 572 A1**
(43) Veröffentlichungstag der Anmeldung: **26.12.2012**
(21) Anmeldenummer: 12004442.5
(22) Anmeldetag: 13.06.2012
(51) Int. Cl.: B01D 50/00, F01M 13/04, B01D 45/16, B01D 46/00

(54) **Abscheidevorrichtung**

(30) Priorität: 24.06.2011 DE 102011105482
(71) Anmelder: Hydac Filtertechnik GmbH, 66280 Sulzbach/Saar (DE)
(72) Erfinder: Lauer, Viktor, Josef, 66809 Nalbach (DE); Wern, Alexander, 66564 Ottweiler-Fürth (DE)
(74) Vertreter: Bartels, Martin Erich Arthur

(57) **Zusammenfassung**

Eine Abscheidevorrichtung zum Abscheiden von in einem strömungsfähigen Medium mitgeführten Verschmutzungen, wie Öl, wobei die Abscheidevorrichtung an einem Gehäuse, insbesondere an einem Getriebegehäuse von hydrodynamischen Wandlergetrieben, anbringbar ist und eine erste Abscheideeinrichtung (1, 5) aufweist, die gebildet ist aus jeweils
- einer Filtereinrichtung (21) und/oder
- einer Koalisierungseinrichtung (5),

die außerhalb des Gehäuses angeordnet und über eine eine Gehäusewand durchgreifende Medienführung mit dem Inneren des Gehäuses verbindbar ist, wobei im Inneren des Gehäuses eine weitere zweite Abscheideeinrichtung (11) angeordnet ist, die wiederum medienführend mit dem Inneren des Gehäuses sowie über die Medienführung mit der ersten Abscheideeinrichtung (1, 5) verbunden ist, wobei beide Abscheideeinrichtungen (1, 5, 11) mit unterschiedlicher Funktionsweise zu einer Baueinheit zusammengefasst sind, wobei das strömungsfähige Medium im Betrieb der Abscheidevorrichtung diese vom Inneren des Gehäuses nach außen zur Umgebung oder umgekehrt durchströmt, und wobei alle Komponenten der ersten und zweiten Abscheideeinrichtung (1, 5, 11) bezogen auf die Gehäusewand stationär angeordnet sind.

## Beschreibung

Die Erfindung betrifft eine Abscheidevorrichtung zum Abscheiden von in einem strömungsfähigen Medium mitgeführten Verschmutzungen, wie Öl, wobei die Abscheidevorrichtung an einem Gehäuse, insbesondere an einem Getriebegehäuse eines hydrodynamischen Wandlergetriebes, anbringbar ist und eine erste Abscheideeinrichtung aufweist, die außerhalb des Gehäuses angeordnet und über eine eine Gehäusewand durchgreifende Medienführung mit dem Inneren des Gehäuses verbindbar ist.

Vorrichtungen dieser Art sind Stand der Technik. Mit der Produktbezeichnung BF-7-Filter der Anmelderin ist beispielsweise eine derartige Abscheidevorrichtung auf dem Markt erhältlich, die für eine Verwendung bei Einrichtungen zur Be- und Entlüftung von Getriebegehäusen vorteilhaft anwendbar ist. Bekanntlich ist beim Betrieb bestimmter Arten von Getrieben, wie hydrodynamischer Turbogetriebe, sowohl eine Belüftung als auch Entlüftung des Gehäuses erforderlich, weil bei derartigen, sozusagen "atmenden" Getrieben bei Vorgängen des Füllens und Leerens von Anfahrwandlern, bei Schaltvorgängen und anderen Änderungen des Betriebszustandes, wie Wechsel von Volllast und Teillast, wechselnde Zuluftströme und Abluftströme über die betreffende Abscheidevorrichtung ins Gehäuseinnere bzw. aus dem Gehäuse heraus zur Umgebung gelangen. Um einen sicheren Betrieb zu gewährleisten müssen daher betreffende Abscheidevorrichtungen im Zuluftbetrieb die sichere Abscheidung von in der Außenluft enthaltenen Verschmutzungen, wie Staubpartikel und dergleichen, gewährleisten, während im Abluftbetrieb aus dem Abluftstrom mitgeführte Flüssigkeitsanteile, wie Getriebeöl, abzuscheiden sind.

Im Hinblick auf diese Problematik stellt sich die Erfindung die Aufgabe, eine Abscheidevorrichtung der in Betracht stehenden Art zur Verfügung zu stellen, die den zu stellenden Anforderungen in besonderem Maße gerecht wird.

Erfindungsgemäß ist diese Aufgabe durch eine Abscheidevorrichtung gelöst, die die Merkmale des Patentanspruchs 1 in seiner Gesamtheit aufweist.

Gemäß der Lehre des Patentanspruchs 1 besteht eine wesentliche Besonderheit der Erfindung darin, dass im Inneren des betreffenden Gehäuses, zusätzlich zu der außerhalb des Gehäuses angeordneten Abscheideeinrichtung, eine weitere Abscheideeinrichtung vorhanden ist, die medienführend mit dem Innenraum des Gehäuses sowie über die die Gehäusewand durchgreifende Medienführung mit der ersten Abscheideeinrichtung verbunden ist. Die im Betrieb stattfindenden Abscheidevorgänge sind daher auf zwei Abscheideeinrichtungen aufgeteilt, deren eine sich außerhalb des betreffenden Gehäuses und deren andere sich innerhalb des Gehäuses befindet. Im Abluftbetrieb findet daher die Abscheidung von Flüssigkeitsanteilen (Öl) unmittelbar im Bereich des Eintrags der Flüssigkeitsbestandteile in den Abluftstrom statt, so dass diese Bestandteile unmittelbar am Ort ihres Eintrags in den Abluftstrom aus diesem abgeschieden werden und im Getriebe verbleiben. Dadurch gelangt der Abluftstrom bereits weitgehend befreit von Verschmutzungen zur außerhalb befindlichen ersten Abscheideeinrichtung, so dass diese, im Wesentlichen unbeeinträchtigt von der Einwirkung des Abluftstroms, für die Feinabscheidung über lange Standzeiten zur Verfügung steht. Dadurch, dass die erste Abscheideeinrichtung beim Abluftbetrieb lediglich einem sozusagen vorgereinigten Abluftstrom ausgesetzt ist, kann die erste Abscheideeinrichtung auch so ausgelegt werden, dass sie im Zuluftbetrieb eine effiziente Feinabscheidung von Verschmutzungen sicherstellt, die von der Zuluft aus der Umgebung mitgeführt werden, so dass das Getriebe bei der Belüftung optimal gegen Verschmutzungseintrag geschützt ist, selbst wenn die im Getriebegehäuse befindliche weitere Abscheideeinrichtung hauptsächlich für das Abscheiden von Flüssigkeitsbestandteilen ausgelegt ist. Mit besonderem Vorteil weist dabei die erste Abscheideeinrichtung eine oder mehrere Abtrennstufen auf, gebildet aus einer Filtereinrichtung und/oder einer Koalisiereinrichtung.

Hinsichtlich der weiteren Abscheideeinrichtung können ebenfalls mehrere Abtrennstufen vorgesehen sein, wie eine Umlenkeinrichtung und/oder eine Sammeleinrichtung und/oder eine Rückhalteeinrichtung, wobei eine Abscheidung von Öltropfen vorzugsweise durch eine Stromumlenkung eines Abluftstroms mittels der Umlenkeinrichtung, das Ansammeln von Flüssigkeitsbestandteilen (Öltropfen) mittels der Sammeleinrichtung sowie eine Abschirmung gegen den Zutritt von Flüssigkeitsspritzern mittels der Rückhalteeinrichtung vorgesehen sein können.

Die Abtrennstufen der im Gehäuse befindlichen weiteren Abscheideeinrichtung können in der Reihenfolge angeordnet sein, dass bei der vom Inneren des Gehäuses nach außen zur Umgebung hin verlaufenden Medienströmungsrichtung zunächst die Rückhalteeinrichtung, dieser nachfolgend die Umlenkeinrichtung und dieser weiter nachfolgend die Sammeleinrichtung angeordnet sind.

Bei der gleichen, dem Abluftbetrieb entsprechenden Medienströmungsrichtung können in der ersten Abscheideeinrichtung zunächst die Koalisiereinrichtung und zu dieser nachfolgend die Filtereinrichtung angeordnet sein.

Bei besonders vorteilhaften Ausführungsbeispielen kann die erste Abscheideeinrichtung ein Filtergehäuse mit einer zur Außenluft führenden Öffnung aufweisen, in dem als Abtrennstufe zumindest ein ölabweisendes Filterelement aufnehmbar ist und das mit einem die Medienführung bildenden Anschlussteil an einer Gehäuseöffnung des betreffenden Getriebes anbringbar ist.

Die erste Abscheideeinrichtung kann zusätzlich zu dem als erste Abtrennstufe dienenden Filterelement als weitere Abtrennstufe die Koalisiereinrichtung zum Beispiel in Form eines durch ein Drahtgeflecht gebildeten Demisters aufweisen, und die zweite Abscheideeinrichtung kann ein Abscheidergehäuse aufweisen, das sich an das Anschlussteil des Filtergehäuses anschließt und sich durch die Gehäuseöffnung in das Getriebe erstreckt.

Die Anordnung kann mit besonderem Vorteil hierbei so getroffen sein, dass das Abscheidergehäuse einen Schacht aufweist, der sich bei der Einbauposition zumindest näherungsweise vertikal im Getriebe erstreckt, an seinem oberen Ende über das Anschlussteil mit dem Filtergehäuse und an seinem unteren Ende mit dem Getriebeinnenraum in Verbindung ist.

Bei besonders vorteilhaften Ausführungsbeispielen kann im Schacht als eine Abtrennstufe die Luft-Umlenkeinrichtung angeordnet sein. Die dadurch bewirkte Strömungsumlenkung des Abluftstroms führt zu einer Vorabscheidung von größeren Öltröpfchen, bevor der Abluftstrom zur ersten Abscheideeinrichtung, und hier vorzugsweise zunächst zum Demister, gelangt.

Hinsichtlich der Bauweise der Luft-Umlenkeinrichtung kann die Anordnung mit Vorteil so getroffen sein, dass mehrere im Schacht in Abständen voneinander angeordnete Umlenkkörper vorgesehen sind, die den Durchgang des Schachtes bis auf Durchgangslöcher verschließen, die in aufeinanderfolgenden Umlenkkörpern zueinander versetzt angeordnet sind. Durch diese versetzte Anordnung kommt es zu einer mäanderförmigen Umlenkung mit entsprechender Abscheidung von Tropfen.

Bei besonders vorteilhaften Ausführungsbeispielen ist im Schacht oberhalb der Luft-Umlenkeinrichtung als weitere Abtrennstufe ein die Sammeleinrichtung bildendes Kragenteil angeordnet, das ein eine obere Begrenzung für die Innenwand des Schachtes bildendes Endteil und ein Innenrohr aufweist, das sich vom Endteil im Abstand von der Innenwand des Schachtes in Richtung auf die Luft-Umlenkeinrichtung erstreckt. Dadurch ist für einen an der Innenwand des Schachtes aufsteigenden Ölfilm eine einen Sammelraum bildende Falle gebildet, die verhindert, dass Steigöl aus dem Schacht zum Anschlussteil des Filtergehäuses gelangt.

Bei besonders vorteilhaften Ausführungsbeispielen ist als Schutz gegen den Eintritt von Spritzöl in den Schacht am unteren, mit dem Getriebeinnenraum in Verbindung stehenden Ende des Schachtes als weitere Abtrennstufe eine die Rückhalteeinrichtung bildende, geschlossene Prallscheibe angeordnet, die von in den Schacht eintretender oder aus diesem austretender Luft umströmbar ist.

Vorzugsweise ist der Schacht in Form eines Hohlzyl inders ausgebildet, in dem das Kragenteil, das zur Zylinderachse konzentrische Innenrohr und die Luft-Umlenkeinrichtung als Umlenkkörper kreisrunde, mit Durchgangslöchern versehene Scheiben aufweisen, die umfänglich an der Schachtinnenwand anliegen.

Nachstehend ist die Erfindung anhand eines in der Zeichnung dargestellten Ausführungsbeispiels im Einzelnen erläutert.

Es zeigen:
- Fig.1: eine perspektivische Schrägansicht eines Ausführungsbeispiels der erfindungsgemäßen Abscheidevorrichtung;
- Fig.2: eine Darstellung des Ausführungsbeispiels, wobei das Filtergehäuse der ersten Abscheideeinrichtung im Zentralschnitt gezeigt ist und die sich in der Zeichnung daran rechtsseitig anschließende weitere Abscheideeinrichtung in Form einer Ölabscheideeinrichtung lediglich schematisiert in Umrissen dargestellt ist, und
- Fig.3: eine demgegenüber vergrößert gezeichnete Schnittdarstellung, in der lediglich das Anschlussteil des Filtergehäuses und die sich daran anschließende Ölabscheideeinrichtung in schematisch vereinfachter Darstellung gezeigt sind.

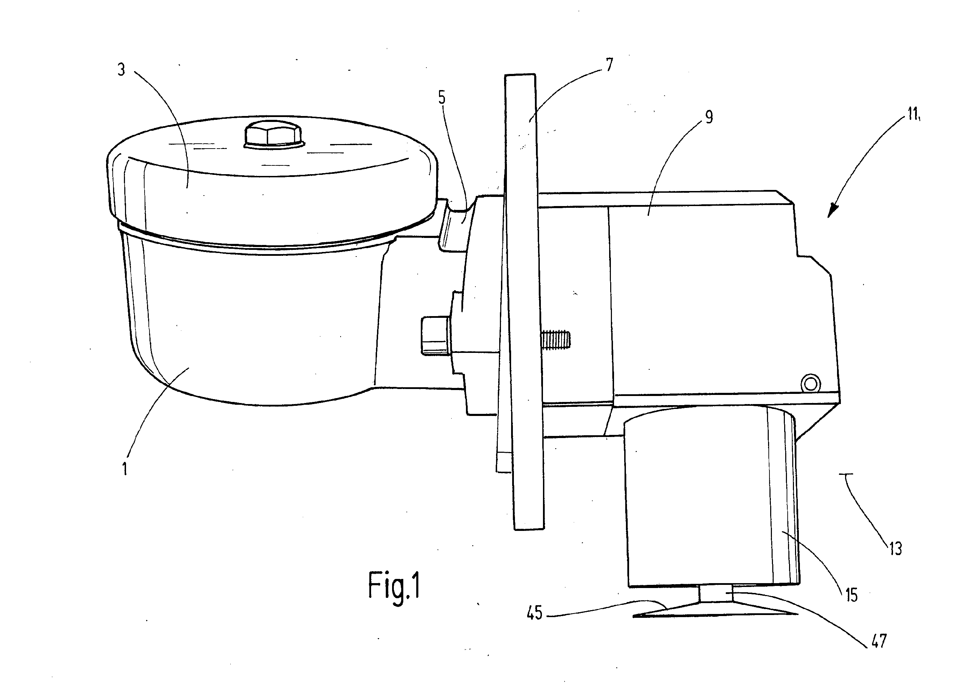

Nachstehend ist die erfindungsgemäße Abscheidevorrichtung anhand eines Beispiels erläutert, das als Be- und Entlüftungsvorrichtung für ein in der Zeichnung nicht dargestelltes hydrodynamisches Turbogetriebe dient. In Fig.1 sind ein Filtergehäuse mit 1 und dessen abnehmbarer Gehäusedeckel mit 3 bezeichnet. Das Filtergehäuse 1 dient zusammen mit einem seitlichen Anschlussteil 5 als erste Abscheideeinrichtung, die über das Anschlussteil 5 an einer Öffnung des betreffenden Gehäuses des zugeordneten Getriebes angeflanscht ist. In Fig.1 ist diesbezüglich lediglich ein an der Öffnung des Getriebegehäuses anbringbarer Flansch 7 dargestellt. An das Anschlussteil 5 anschließend erstreckt sich durch die Öffnung des Getriebegehäuses hindurch das Oberteil 9 einer weiteren Abscheideeinrichtung in den Innenraum 13 des nicht gezeigten Getriebes hinein. Diese weitere Abscheideeinrichtung ist als Ölabscheideeinrichtung 11 ausgebildet. Diese weist einen sich an das Oberteil 9 rechtwinklig abgewinkelt anschließenden Schacht 15 auf, der sich im Getriebeinnenraum 13 vertikal nach unten erstreckt.

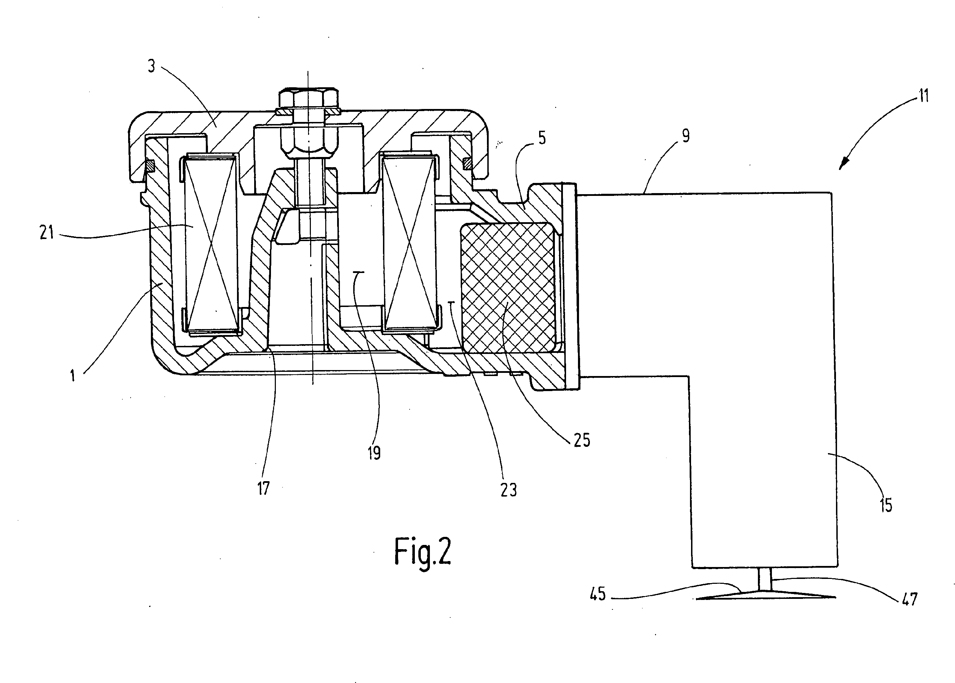

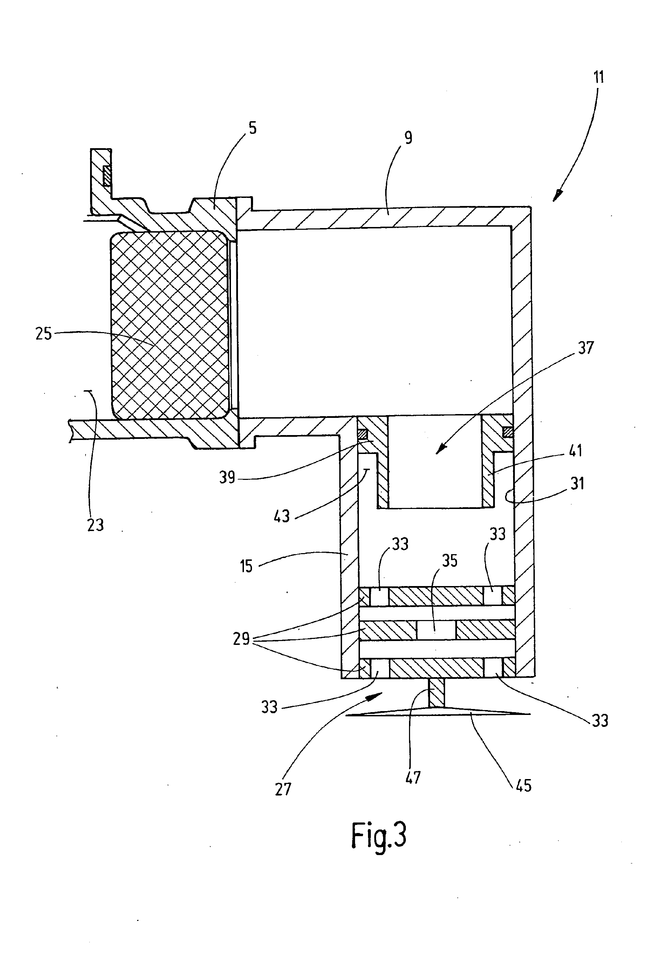

Nähere Einzelheiten des Filtergehäuses 1 mit Anschlussteil 5 und der Ölabscheideeinrichtung 11 sind in den Fig.2 bzw. 3 dargestellt. Das Filtergehäuse 1 weist am Gehäuseboden eine zur Außenluft führende Öffnung 17 auf, die mit einem inneren Filterhohlraum 19 in Verbindung ist, der von einem hohlzylinderförmigen Filterelement 21 umgeben ist. Bei diesem kann es sich um ein in üblicher Weise plissiertes Papiervliesfilter oder vorzugsweise um ein besonders ölabweisendes Glasfaserelement handeln, wobei Filterfeinheiten von 10 µm in Betracht kommen. Der Raum 23 an der Außenseite des Filterelements 21 ist zu dem seitlichen Anschlussteil 5 des Filtergehäuses 1 hin offen, an das sich wiederum das Oberteil 9 der Ölabscheideeinrichtung 11 anschließt. Innerhalb des Anschlussteils 5 befindet sich ein Demister 25, der in üblicher Weise durch ein Drahtgeflecht gebildet ist.

Die Fig.3 verdeutlicht den Aufbau der Ölabscheideeinrichtung 11. Wie ersichtlich, ist der Schacht 15, der, wie der Fig.1 entnehmbar ist, einen Kreiszylinder bildet, an seinem oberen Ende zum Oberteil 9 hin offen, das wiederum mit dem Anschlussteil 5 des Filtergehäuses 1 in unmittelbarer Verbindung ist, d.h. über den Demister 25 mit dem Raum 23 des Filtergehäuses 1 in Verbindung ist. Der Schacht 15 erstreckt sich, vom Oberteil 9 im rechten Winkel abgewinkelt, innerhalb des Gehäuseinnenraums 13 vertikal nach unten. Vor dem unteren Ende des Schachtes 15 befindet sich eine Luft-Umlenkeinrichtung 27. Diese weist beim vorliegenden Beispiel drei Umlenkkörper in Form von entlang der Zylinderachse des Schachtes 15 in Abständen voneinander angeordneten Scheiben 29 auf, die mit ihrem Umfang an der Innenwand 31 des Schachtes 15 anliegen. Die Scheiben 29 verschließen somit den Schacht 15 bis auf in den Scheiben 29 befindliche Durchgangslöcher 33 und 35. Wie Fig.3 zeigt, sind die Löcher 33 und 35 in aufeinanderfolgenden Scheiben 29 jeweils zueinander versetzt, so dass durchströmende Luft mäanderförmig umgelenkt wird, um durch die Stromumlenkung Öltropfen abzuscheiden. Wie Fig.3 weiterhin zeigt, sind Durchgangslöcher 33 und 35 unterschiedlicher Durchmesser vorgesehen.

Am Übergang des Schachtes 15 zum Oberteil 9 befindet sich ein Kragenteil 37, das mit einem flanschartig radial vorspringenden Endteil 39 die obere Begrenzung der Innenwand 31 des Schachtes 15 bildet. Vom Endteil 39 weg erstreckt sich, und zwar in einem Abstand von der Innenwand 31, ein Innenrohr 41 in Richtung auf die oberste Scheibe 29 der Luft-Umlenkeinrichtung 27. Zwischen der Außenseite des Innenrohres 41, der Innenwand 31 des Schachtes 15 sowie dem Endteil 39 ist somit ein Ringraum 43 gebildet, der für Kriechöl, das entlang der Innenwand 31 des Schachtes 15 aufsteigen könnte, eine Falle bildet, die einen Übertritt in das Oberteil 9 verhindert.

Als Schutz gegen unmittelbar zum unteren Ende des Schachtes 15 gelangendes Spritzöl ist eine Prallscheibe 45 in Form einer tellerartigen, geschlossenen runden Platte vorgesehen, die über einen Stiel 47 an der untersten Scheibe 29 der Luft-Umlenkeinrichtung 27 in einem solchen Abstand von dieser Scheibe 29 angebracht ist, dass sie von in den Schacht 15 eintretender oder aus diesem austretender Luft umströmbar ist. Die Prallscheibe 45 hat einen dem Zylinderdurchmesser des Schachtes 15 entsprechenden Durchmesser.

Während die hier beschriebene weitere Abscheideeinrichtung 11, die eine Strömungs-Umlenkeinrichtung 27 in Form eines Labyrinths in Kombination mit einer Sammeleinrichtung 37 und einer eine Prallplatte 45 aufweisenden Rückhalteeinrichtung aufweist, für den vorliegenden Einsatzzweck als besonders geeignet und vorteilhaft anzusehen ist, versteht sich, dass auch andere aus dem Stand der Technik an sich bekannte Abscheideeinrichtungen, wie Zyklone etc., alternativ oder zusätzlich benutzt werden könnten. Auch ist die Erfindung nicht auf die gezeigte, spezielle Bauart der ersten Abscheideeinrichtung 1, 5 beschränkt, vielmehr könnten andere als die gezeigten Filterbauweisen in Kombination mit einem Demister 25 vorgesehen sein.

## Patentansprüche

1. Abscheidevorrichtung zum Abscheiden von in einem strömungsfähigen Medium mitgeführten Verschmutzungen, wie Öl, wobei die Abscheidevorrichtung an einem Gehäuse, insbesondere an einem Getriebegehäuse von hydrodynamischen Wandlergetrieben, anbringbar ist und eine erste Abscheideeinrichtung (1, 5) aufweist, die gebildet ist aus jeweils
- einer Filtereinrichtung (21) und/oder
- einer Koalisiereinrichtung (5),
die außerhalb des Gehäuses angeordnet und über eine eine Gehäusewand durchgreifende Medienführung mit dem Inneren des Gehäuses verbindbar ist, wobei im Inneren des Gehäuses eine weitere zweite Abscheideeinrichtung (11) angeordnet ist, die wiederum medienführend mit dem Inneren des Gehäuses sowie über die Medienführung mit der ersten Abscheideeinrichtung (1, 5) verbunden ist, wobei beide Abscheideeinrichtungen (1, 5, 11) mit unterschiedlicher Funktionsweise zu einer Baueinheit zusammengefasst sind, wobei das strömungsfähige Medium im Betrieb der Abscheidevorrichtung diese vom Inneren des Gehäuses nach außen zur Umgebung oder umgekehrt durchströmt, und wobei alle Komponenten der ersten und zweiten Abscheideeinrichtung (1, 5, 11) bezogen auf die Gehäusewand stationär angeordnet sind.

2. Abscheidevorrichtung nach Anspruch 1, **dadurch gekennzeichnet, dass** die weitere Abscheideeinrichtung (11) mindestens eine Abtrennstufe aufweist, gebildet aus jeweils
- einer Umlenkeinrichtung (27) und/oder
- einer Sammeleinrichtung (37) und/oder
- einer Rückhalteeinrichtung (45).

3. Abscheidevorrichtung nach einem der beiden vorstehenden Ansprüche, **dadurch gekennzeichnet, dass** das strömungsfähige Medium mit seinen Verschmutzungen im Betrieb der Abscheidevorrichtung diese vom Inneren des Gehäuses nach außen zur Umgebung oder umgekehrt durchströmt.

4. Abscheidevorrichtung nach einem der vorstehenden Ansprüche,
**dadurch gekennzeichnet, dass** in der vom Inneren des Gehäuses nach außen zur Umgebung hin verlaufenden einen Medienströmungsrichtung gesehen die weitere Abscheideeinrichtung (11) die Rückhalteeinrichtung (45) dieser nachfolgend die Umlenkeinrichtung (27) und dieser weiter nachfolgend die Sammeleinrichtung (37) aufweist.

5. Abscheidevorrichtung nach einem der vorstehenden Ansprüche,
**dadurch gekennzeichnet, dass** in dieser einen Medienströmungsrichtung gesehen die Koalisiereinrichtung (25) der ersten Abscheideeinrichtung (1, 5) nachfolgend zu der weiteren Abscheideeinrichtung (11) und der Koalisiereinrichtung (25) weiter nachfolgend die Filtereinrichtung (21) angeordnet sind.

6. Abscheidevorrichtung nach einem der vorstehenden Ansprüche,
**dadurch gekennzeichnet, dass** die erste Abscheideeinrichtung (1, 5) ein Filtergehäuse (1) mit einer zur Außenluft führenden Öffnung (17) aufweist, in dem als Abtrennstufe zumindest ein ölabweisendes Filterelement (21) aufnehmbar ist und das mit einem Anschlussteil (5) an einer Gehäuseöffnung des betreffenden Getriebes anbringbar ist.

7. Abscheidevorrichtung nach einem der vorstehenden Ansprüche,
**dadurch gekennzeichnet, dass** die erste Abscheideeinrichtung (1, 5) als weitere Abtrennstufe die Koalisiereinrichtung (25) vorzugsweise in Form eines durch ein Drahtgeflecht gebildeten Demisters aufweist.

8. Abscheidevorrichtung nach einem der vorstehenden Ansprüche, **dadurch gekennzeichnet, dass** die zweite Abscheideeinrichtung (11) ein Abscheidergehäuse (9, 15) aufweist, das sich an das Anschlussteil (5) des Filtergehäuses (1) anschließt und sich durch die Gehäuseöffnung in das Getriebe erstreckt.

9. Abscheidevorrichtung nach einem der vorstehenden Ansprüche, **dadurch gekennzeichnet, dass** das Abscheidergehäuse (9, 15) einen Schacht (15) aufweist, der sich bei der Einbauposition zumindest näherungsweise vertikal im Getriebe erstreckt, an seinem oberen Ende (9) über das Anschlussteil (5) mit dem Filtergehäuse (1) und an seinem unteren Ende mit dem Getriebeinnenraum (13) in Verbindung ist.

10. Abscheidevorrichtung nach einem der vorstehenden Ansprüche, **dadurch gekennzeichnet, dass** im Schacht (15) als Abtrennstufe die Luft-Umlenkeinrichtung (27) angeordnet ist.

11. Abscheidevorrichtung nach einem der vorstehenden Ansprüche, **dadurch gekennzeichnet, dass** die Luft-Umlenkeinrichtung (27) mehrere im Schacht (15) in Abständen voneinander angeordnete Umlenkkörper (29) aufweist, die den Durchgang des Schachtes (15) bis auf Durchgangslöcher (33, 35) verschließen, die in aufeinanderfolgenden Umlenkkörpern (29) zueinander versetzt angeordnet sind.

12. Abscheidevorrichtung nach einem der vorstehenden Ansprüche, **dadurch gekennzeichnet, dass** im Schacht (15) oberhalb der Luft-Umlenkeinrichtung (27) ein die Sammeleinrichtung bildendes Kragenteil (37) angeordnet ist, das ein eine obere Begrenzung für die Innenwand (31) des Schachtes (15) bildendes Endteil (39) und ein Innenrohr (41) aufweist, das sich vom Endteil (39) im Abstand von der Innenwand (31) des Schachtes (15) in Richtung auf die Luft-Umlenkeinrichtung (27) erstreckt.

13. Abscheidevorrichtung nach einem der vorstehenden Ansprüche, **dadurch gekennzeichnet, dass** dem unteren, mit dem Getriebeinnenraum (13) in Verbindung stehenden Ende des Schachtes (15) eine die Rückhalteeinrichtung bildende, geschlossene Prallscheibe (45) zugeordnet ist, die von in den Schacht (15) eintretender oder aus diesem austretender Luft umströmbar ist.

14. Abscheidevorrichtung nach einem der vorstehenden Ansprüche, **dadurch gekennzeichnet, dass** der Schacht (15) in Form eines Hohlzylinders ausgebildet ist, in dem das Kragenteil (37), das zur Zylinderachse konzentrische Innenrohr (41) und die Luft-Umlenkeinrichtung (27) als Umlenkkörper kreisrunde, mit Durchgangslöchern (33, 35) versehene Scheiben (39) aufweisen, die umfänglich an der Schachtinnenwand (31) anliegen.

15. Abscheidevorrichtung nach einem der vorstehenden Ansprüche, **dadurch gekennzeichnet, dass** die Prallscheibe (45) kreisrund ist und mit dem Zylinderdurchmesser entsprechendem Durchmesser im Abstand von unteren Ende des Schachtes (15) angeordnet ist.
